# EUROPEAN PATENT SPECIFICATION

(11) **EP 4 016 016 B1**
(45) Date of publication and mention of the grant of the patent: **18.11.2026**
(21) Application number: 21213503.2
(22) Date of filing: 09.12.2021
(51) Int. Cl.: G01J 3/02, G01J 3/28, G02B 17/06, G02B 27/14

(54) **OPTICAL SYSTEM AND PLANE SPECTROSCOPIC DEVICE**
OPTISCHES SYSTEM UND PLANARE SPEKTROSKOPISCHE VORRICHTUNG
SYSTÈME OPTIQUE ET DISPOSITIF SPECTROSCOPIQUE PLAN

(30) Priority: 17.12.2020 JP 2020209578
(43) Date of publication of application: 22.06.2022
(73) Proprietor: CANON KABUSHIKI KAISHA, OHTA-KU Tokyo 146-8501 (JP)
(72) Inventor: SUKEGAWA, Takashi, Tokyo (JP)
(74) Representative: WESER & Kollegen Patentanwälte PartmbB

(56) References cited:
- JP-A- 2012 237 647
- US-A1- 2006 072 109
- US-B2- 8 958 065
- HAGEN NATHAN ET AL: "Review of snapshot spectral imaging technologies", OPTICAL ENGINEERING, vol. 52, no. 9, 23 September 2013 (2013-09-23), BELLINGHAM, pages 090901, XP055915445, ISSN: 0091-3286, DOI: 10.1117/1.OE.52.9.090901
- CONTENT ROBERT: "Image slicer for integral field spectroscopy with NGST", ALGORITHMS AND TECHNOLOGIES FOR MULTISPECTRAL, HYPERSPECTRAL, AND ULTRASPECTRAL IMAGERY XIX - PROCEEDINGS OF SPIE, vol. 3356, 28 August 1998 (1998-08-28), US, pages 122 - 133, XP055914169, ISSN: 0277-786X, ISBN: 978-1-5106-4548-6, DOI: 10.1117/12.324521
- DING XIAOMING ET AL: "Modeling and Optimization of Image Mapper for Snapshot Image Mapping Spectrometer", IEEE ACCESS, vol. 6, 8 May 2018 (2018-05-08), pages 29344 - 29352, XP011685581, DOI: 10.1109/ACCESS.2018.2834485

## Description

### BACKGROUND OF THE INVENTION

### Field of the Invention

The present exemplary embodiments relate to an optical system and a plane spectroscopic device.

### Description of the Related Art

When a dynamic phenomenon is analyzed in detail, it is highly useful to obtain information about wavelength (energy) by simultaneously and temporally performing spectral dispersion on images, and it is important in all fields involving chemical reactions. To simultaneously perform spectral dispersion on image information, which is two-dimensional, it is necessary to convert a two-dimensional image into a one-dimensional image because a general detector supports two-dimensional or less dimensional images and thus the number of dimensions into which wavelength information is expanded increases. Thus, a plane division optical system is an important element in plane spectral division which is collectively performed at substantially the same timing (Japanese Patent Application Laid-Open No. 2012-237647).

If an original image is more finely divided, higher-resolution information is obtainable, but it is not easy to one-dimensionally array divided images in a limited space. Most conveniently, one of means is to spread a large number of optical fibers all over an image portion and to one-dimensionally rearrange the optical fibers by utilizing their flexibility, which is a highly excellent method by which a higher resolution is achieved through an increase of fine optical fibers. However, the transmittance of the optical fiber is not completely uniform, and it is difficult to extract original light information in a uniform state, due to, for example, a polarization state of light changes because of a curvature. An optical fiber generally includes a core portion through which light passes and a clad portion that causes total reflection, and has an optimum size depending on a wavelength to be transmitted. Thus, there is no optical fiber optimum for a wide wavelength, and it is difficult in principle to efficiently perform plane spectral dispersion in a wide wavelength band. To address this, a method is available in which an image is spatially divided by a plurality of mirrors and the resultant image is one-dimensionally rearranged. There is a slight change in light characteristics due to reflection characteristics of the mirrors, but it is stable and it is easy to restore information. However, even if the divisional number is set to about several tens in consideration of manufacturing process, such as adjustment, because it is necessary to extremely accurately arrange the respective mirrors in terms of position and accuracy, the structure becomes spatially large, resulting in a difficulty in incorporating the mirrors into general equipment with an equivalent number of divisions. The plane division optical system is also effective in a case where an image is observed by a one-dimensional detector that is inexpensive and is capable of performing readout with high resolution at a high speed without using a two-dimensional detector.
US 2006/0072109 A1 relates to a hyperspectral imaging system in which a lenslet array is used to reimage and divide the field of View into multiple channels. US 8 958 065 B2 discloses an optical slicer for spectroscopy that reshapes a circular input beam into a slit-shaped output of higher aspect ratio by sequentially compressing, geometrically dividing at flat mirror edges, and re-stacking beam portions in parallel, thereby increasing spectrometer light throughput without sacrificing beam intensity.

### SUMMARY OF THE INVENTION

According to a first aspect of the present invention, there is provided an optical system as specified in claims 1 to 6. According to a second aspect of the present invention, there is provided a plane spectroscopic device as specified in claim 7 and 8.
Further features of the present invention will become apparent from the following description of exemplary embodiments with reference to the attached drawings.

### BRIEF DESCRIPTION OF THE DRAWINGS

Fig. 1 is a view illustrating an optical system of a first exemplary embodiment.
Figs. 2A to 2C are views each illustrating a configuration of a second reflecting portion.
Fig. 3 is a view of the optical system according to the first exemplary embodiment as viewed from a side of a first reflecting portion.
Fig. 4 is a bird's-eye view of the optical system according to the first exemplary embodiment.
Fig. 5 is a view illustrating a configuration of a third reflecting portion.
Fig. 6 is a view illustrating an optical system according to a second exemplary embodiment.
Fig. 7 is a schematic view of a plane spectroscopic device.

### DESCRIPTION OF THE EMBODIMENTS

Hereinafter, preferred exemplary embodiments of the present invention will be described in detail with reference to the accompanying drawings.

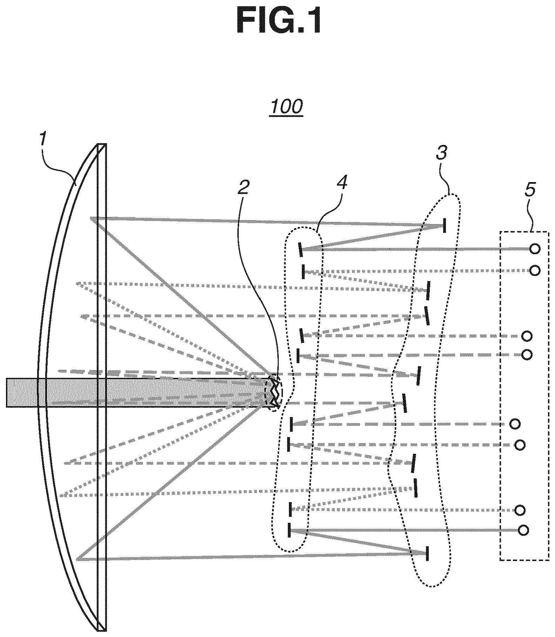

A first exemplary embodiment of the present invention will be described below. Fig. 1 illustrates a view of a field division optical system 100 of the first exemplary embodiment. The field division optical system 100 is an optical system that divides a light flux from a side of an object plane. As illustrated in Fig. 1, the field division optical system 100 roughly includes four groups of mirrors in order from an incident direction of an incident light flux to be divided. The field division optical system 100 includes a first reflecting portion 1, a second reflecting portion 2, a third reflecting portion 3, and a fourth reflecting portion 4.

The first reflecting portion 1 is a curved-surface mirror having a curved reflective surface, and is provided with an opening through which the light flux from the object plane passes or a transmitting portion 1a through which the light flux is transmitted. For example, the opening is a cavity, and the transmitting portion 1a is formed of a transparent optical member. The first reflecting portion 1 is, for example, a rotationally symmetric concave mirror.

The second reflecting portion 2 has a plurality of reflective surfaces (mirrors) 2a that reflects the light flux through the opening or the transmitting portion 1a of the first reflecting portion 1 in directions different from one another depending on positions. In other words, the reflective surfaces 2a divide incident light into light fluxes by reflecting the incident light to positions different from one another on the reflective surface of the first reflecting portion 1. The reflective surfaces of the second reflecting portion 2 are each a mirror having a rectangular outer shape and arranged without a gap on a plane on which the incident light forms an image.

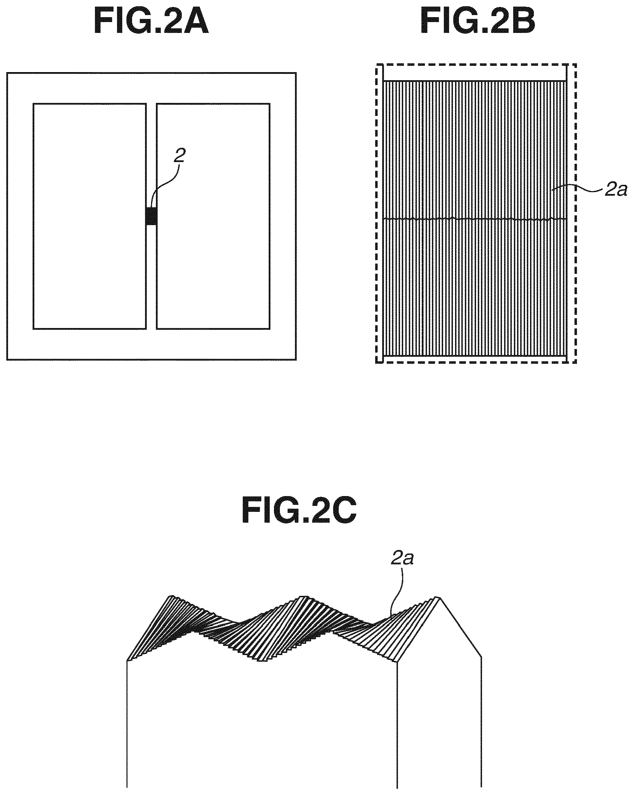

Figs. 2A to 2C each illustrate a configuration of the second reflecting portion. As illustrated in Fig. 2A, the second reflecting portion 2 is supported by a support frame. Fig. 2B is a front view of the second reflecting portion 2, and the plurality of reflective surfaces 2a is integrated as viewed from the front. Fig. 2C is a view of the second reflecting portion 2 as viewed obliquely, and the respective surfaces of the plurality of reflective surfaces 2a face different directions from one another.

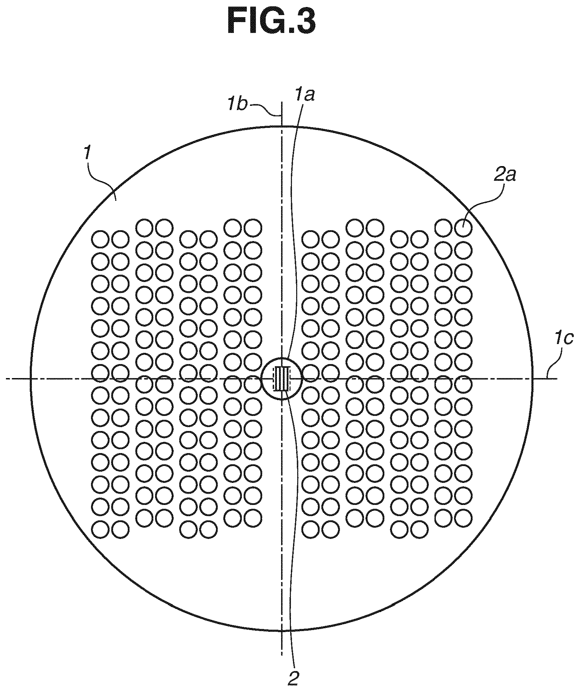

The incident light fluxes to be divided are all reflected in different directions by the respective reflective surfaces 2a of the second reflecting portion 2, and are then reflected by the first reflecting portion 1. At this time, since each rectangular reflective surface 2a isotropically distributes the divided light, the isotropically divided reflected light impinges on the reflective surface of the first reflecting portion 1, as illustrated in Fig. 3. In the first reflecting portion 1, light impinges at positions indicated by circles in Fig. 3. In other words, the light fluxes resulting from the division by the second reflecting portion 2 are incident on each region into which the reflective surface of the first reflecting portion 1 are divided by two axes 1b and 1c perpendicular to a rotational symmetry axis of the first reflecting portion 1.

The second reflecting portion 2 is arranged so that the center thereof is located on an optical axis passing through the opening or the transmitting portion 1a of the first reflecting portion 1. A plurality of mirrors (reflective surfaces) of the third reflecting portion 3 and the fourth reflecting portion 4 are arranged around a central axis with the optical axis of the first reflecting portion 1 serving as the central axis. In other words, the central axes of the first reflecting portion 1, the second reflecting portion 2, the third reflecting portion 3, and the fourth reflecting portion 4 are coaxially arranged. With such a configuration of the optical system 100, it is possible to spatially utilize an isotropic space with the incident light flux as the axis, and to achieve downsizing.

The third reflecting portion 3 is a mirror group including a plurality of mirrors (reflective surfaces) 3a, and reflects the light reflected by the second reflecting portion 2 and the first reflecting portion 1. The number of mirrors 3a of the third reflecting portion 3 on which the light from the first reflecting portion 1 is incident is the same as the number of divisions of the light fluxes by the second reflecting portion 2.

The fourth reflecting portion 4 is a mirror group including a plurality of mirrors (reflective surfaces) 4a, and reflects the light from the third reflecting portion 3. The number of mirrors 4a of the fourth reflecting portion 4 on which the light from the first reflecting portion 1 is incident is the same as the number of mirrors 3a of the third reflecting portion 3. Each mirror 4a of the fourth reflecting portion 4 is a curved-surface mirror. Images that are condensed and one-dimensionally (linearly) arrayed by the mirrors 4a of the fourth reflecting portion 4 are formed in an image-reforming area. In other words, the light fluxes reflected by the first reflecting portion 1 are reflected by the third reflecting portion 3 and the fourth reflecting portion 4 to be image formed, so that divided images of the object plane is formed at an image-reforming position 5 of a predetermined plane.

Each of the mirrors of the third reflecting portion 3 has a flat surface and each of the mirrors of the fourth reflecting portion 4 has a spherical surface, but may be reversed. In other words, either the plurality of mirrors of the third reflecting portion or the plurality of mirrors of the fourth reflecting portion has a flat surface and the other has a curved surface.

The mirrors of each of the second reflecting portion 2, the third reflecting portion 3, and the fourth reflecting portion 4 face different directions.

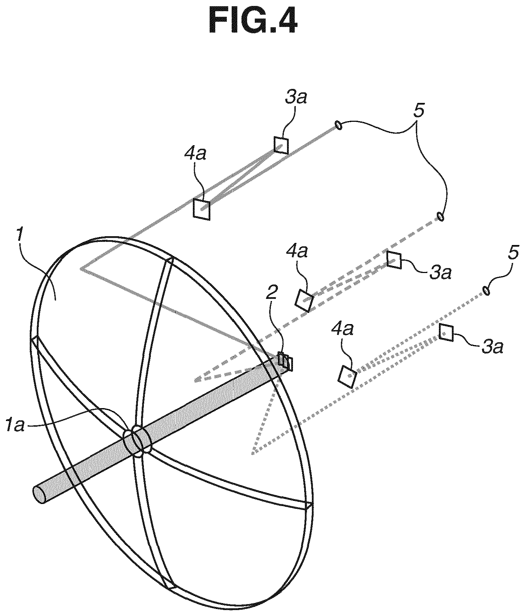

Fig. 4 illustrates a bird's-eye view of the optical system 100, and illustrates optical paths reflected by the respective reflecting portions. The first reflecting portion 1 has an opening in a central portion, and the mirrors are arranged so that the light divided by the second reflecting portion 2 does not overlap the mirrors of each of the third reflecting portion 3 and the fourth reflecting portion 4. The second reflecting portion 2 is integrally molded so as to fill an image plane portion for the incident light.

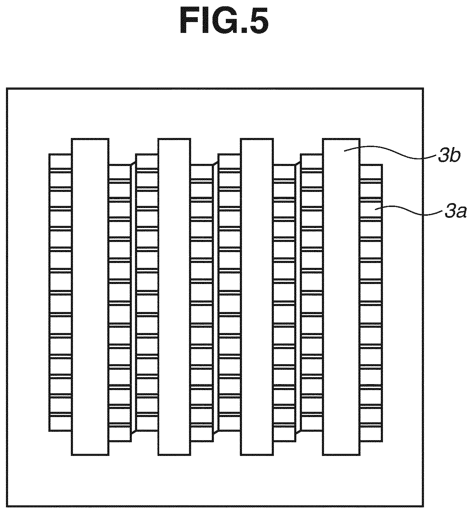

Fig. 5 illustrates a configuration of the third reflecting portion. The mirrors 3a of the third reflecting portion 3 are each formed on a physically integrated structure, but an opening 3b is provided in a portion through which the light flux passes. Similarly, the mirrors 4a of the fourth reflecting portion 4 is formed on a physically integrated structure, but an opening is provided in a portion through which the light flux passes.

The first reflecting portion 1, the second reflecting portion 2, the third reflecting portion 3, and the fourth reflecting portion 4 have an isotropic structure centered on the incident light flux axis, and the plane spectroscopic optical system can be easily assembled, without any adjusting mechanism, by simply arranging these reflecting portions at desired intervals.

As is clear from the light flux flight cross-sectional view of Fig. 1, the images are rearrayed using a space as densely as possible, and a flight distance in the space and the mirror configuration are also controlled, thus achieving downsizing and highly efficient plane division while providing high resolution.

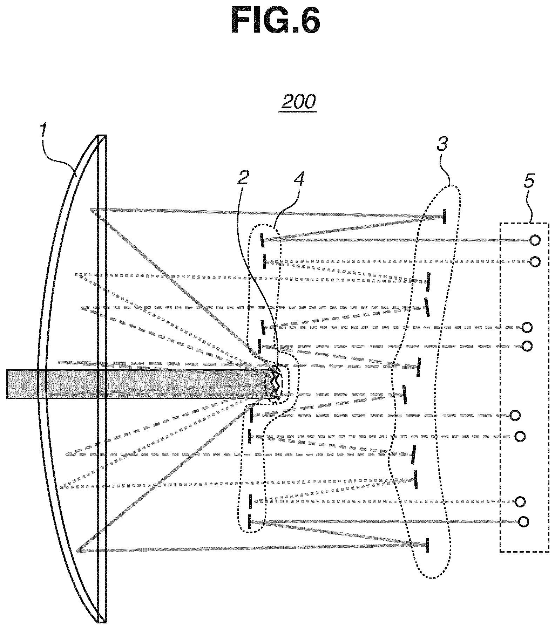

A second exemplary embodiment of the present invention will be described below. In the present exemplary embodiment, relative positions of a second reflecting portion 2 and a fourth reflecting portion 4 are different from those in the first exemplary embodiment. Fig. 6 illustrates an optical system 200 according to the present exemplary embodiment. As illustrated in Fig. 6, the fourth reflecting portion 4 is arranged forward of the second reflecting portion 2 (the side closer to a first reflecting portion). As a result, the fourth reflecting portion 4 is arranged in the vicinity of the front and rear of the second reflecting portion 2, and thus, the second reflecting portion 2 and the fourth reflecting portion 4 can be formed on an integrated structure.

Next, a plane spectroscopic device using the optical system according to an above-described exemplary embodiment will be described.

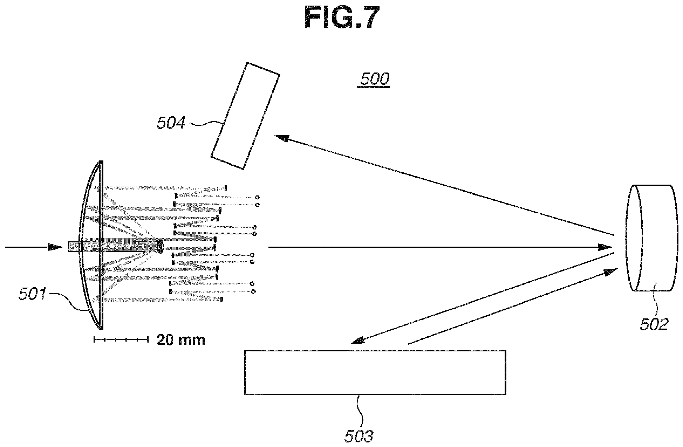

Fig. 7 illustrates a schematic view of a plane spectroscopic device 500. The plane spectroscopic device 500 causes a light flux that is to be spectrally dispersed to be incident on an optical system 501 according to an above-described exemplary embodiment, one-dimensionally rearrays the light flux through plane division, and then performs the plane spectrum dispersion via an image-forming mirror 502, a spectroscopic element 503, and a detection unit 504. The light to be spectrally dispersed is, for example, infrared light.

In the plane spectroscopic device 500, the light flux is reflected from the plane division optical system 501 to the spectroscopic element 503, which is, for example, a diffraction grating, using the image-forming mirror 502 which is an off-axis paraboloid mirror. The light flux spectrally dispersed by the spectroscopic element 503 and spread on the plane is incident on the paraboloid mirror again by diffraction, and forms an image on the detection unit 504 having a two-dimensional detector. Thus, a result of a spectrally dispersed image plane can be obtained.

To obtain an original image for each wavelength, it is possible to obtain a spectral image in an original-image form by rearraying a one-dimensional image of a desired wavelength on the two-dimensional detector in accordance with a division rule.

Although the preferred exemplary embodiments of the present invention have been described above, the present invention is not limited to these exemplary embodiments, and various modifications and changes can be made within the scope of the gist of the present invention.

According to the above exemplary embodiments, a plane spectroscopic device that is advantageous in downsizing, high resolution, or high efficiency can be provided.

While the present invention has been described with reference to exemplary embodiments, it is to be understood that the invention is not limited to the disclosed exemplary embodiments.

## Claims

1. An optical system (100, 200) that divides a light flux from an object plane, the optical system comprising:
a first curved-surface mirror (1) having an opening through which the light flux from the object plane passes or a transmitting portion (1a) through which the light flux is transmitted;
a second reflecting portion (2) including a plurality of reflective surfaces (2a) that divides the light flux from the opening or the transmitting portion (1a) of the first curved-surface mirror (1), and configured to reflect each of light fluxes resulting from the dividing by the respective reflective surfaces (2a), to respective positions different from one another on the first curved-surface mirror (1);
a third reflecting portion (3) having a plurality of reflective surfaces (3a) each of which reflects the light fluxes that have resulted from the dividing by the second reflecting portion (2) and have been reflected on the first curved-surface mirror (1); and
a fourth reflecting portion (4) having a plurality of reflective surfaces (4a) that reflects the light fluxes from the third reflecting portion (3),
wherein the number of reflective surfaces (3a, 4a) of each of the third reflecting portion and the fourth reflecting portion on which the fluxes from the first curved-surface mirror (1) are incident is the same as a division number in the dividing of the light flux by the second reflecting portion (2), and
wherein the respective light fluxes reflected by the first curved-surface mirror (1) are reflected by the third reflecting portion (3) and the fourth reflecting portion (4) to be image-formed so that divided images of the object plane are formed, and
each of the light fluxes reflected by the first curved-surface mirror (1) is reflected by the third reflecting portion (3) and the fourth reflecting portion (4) to form an image in which divided images are each linearly arranged in a predetermined direction.

2. The optical system according to claim 1, wherein central axes of the first curved-surface mirror, the second reflecting portion, the third reflecting portion, and the fourth reflecting portion are coaxially arranged.

3. The optical system according to claim 1, wherein each reflective surface of the second reflecting portion has a rectangular shape.

4. The optical system according to claim 1,
wherein the first curved-surface mirror is a rotationally symmetric concave mirror, and
wherein, in the first curved-surface mirror, the light fluxes resulting from the dividing by the second reflecting portion are incident on each of regions into which the first curved-surface mirror are divided by two axes perpendicular to a rotational symmetry axis.

5. The optical system according to claim 1, wherein one of the plurality of reflective surfaces of the third reflecting portion and the plurality of reflective surfaces of the fourth reflecting portion is a flat surface, and the other is a curved surface.

6. The optical system according to claim 1, wherein at least one of the second reflecting portion, the third reflecting portion, and the fourth reflecting portion integrally forms each reflective surface.

7. A plane spectroscopic device comprising:
an optical system according to claim 1;
a spectroscopic element configured to spectrally disperse light from the optical system; and
a detection means for detecting the light spectrally dispersed by the spectroscopic element.

8. The plane spectroscopic device according to claim 7, wherein infrared light is spectrally dispersed.

## Patentansprüche

1. Optiksystem (100, 200), das einen Lichtfluss von einer Objektebene teilt, wobei das Optiksystem umfasst:
einen ersten Spiegel (1) mit gekrümmter Oberfläche mit einer Öffnung, durch die der Lichtfluss von der Objektebene hindurchgeht, oder einem Übertragungsabschnitt (1a), durch den der Lichtfluss übertragen wird;
einen zweiten reflektierenden Abschnitt (2) mit mehreren reflektierenden Oberflächen (2a), der den Lichtfluss von der Öffnung oder dem Übertragungsabschnitt (1a) des ersten Spiegels (1) mit gekrümmter Oberfläche teilt und konfiguriert ist, einen jeweiligen der aus der Teilung durch die jeweiligen reflektierenden Oberflächen (2a) resultierenden Lichtflüsse an entsprechende Positionen auf dem ersten Spiegel (1) mit gekrümmter Oberfläche zu reflektieren, die sich voneinander unterscheiden;
einen dritten reflektierenden Abschnitt (3) mit mehreren reflektierenden Oberflächen (3a), die jeweils die Lichtflüsse reflektieren, die aus der Teilung durch den zweiten reflektierenden Abschnitt (2) resultieren und auf dem ersten Spiegel (1) mit gekrümmter Oberfläche reflektiert wurden; und
einen vierten reflektierenden Abschnitt (4) mit mehreren reflektierenden Oberflächen (4a), der die Lichtflüsse von dem dritten reflektierenden Abschnitt (3) reflektiert,
wobei die Anzahl der reflektierenden Oberflächen (3a, 4a) des dritten reflektierenden Abschnitts bzw. des vierten reflektierenden Abschnitts, auf die die Flüsse vom ersten Spiegel (1) mit gekrümmter Oberfläche einfallen, die gleiche ist wie eine Teilungszahl bei der Teilung des Lichtflusses durch den zweiten reflektierenden Abschnitt (2), und
wobei die entsprechenden durch den ersten Spiegel (1) mit gekrümmter Oberfläche reflektierten Lichtflüsse durch den dritten reflektierenden Abschnitt (3) und den vierten reflektierenden Abschnitt (4) reflektiert werden, um so abgebildet zu werden, dass geteilte Bilder der Objektebene gebildet werden, und
wobei ein jeweiliger der durch den ersten Spiegel (1) mit gekrümmter Oberfläche reflektierten Lichtflüsse durch den dritten reflektierenden Abschnitt (3) und den vierten reflektierenden Abschnitt (4) reflektiert wird, um ein Bild zu erzeugen, in dem geteilte Bilder jeweils linear in einer vorbestimmten Richtung angeordnet sind.

2. Optiksystem nach Anspruch 1, wobei Mittelachsen des ersten Spiegels mit gekrümmter Oberfläche, des zweiten reflektierenden Abschnitts, des dritten reflektierenden Abschnitts und des vierten reflektierenden Abschnitts koaxial angeordnet sind.

3. Optiksystem nach Anspruch 1, wobei eine jeweilige reflektierende Oberfläche des zweiten reflektierenden Abschnitts eine rechteckige Form aufweist.

4. Optiksystem nach Anspruch 1,
wobei der erste Spiegel mit gekrümmter Oberfläche ein rotationssymmetrischer konkaver Spiegel ist, und
wobei in dem ersten Spiegel mit gekrümmter Oberfläche die aus der Teilung durch den zweiten reflektierenden Abschnitt resultierenden Lichtflüsse auf einen jeweiligen der Bereiche einfallen, in die der erste Spiegel mit gekrümmter Oberfläche durch zwei Achsen senkrecht zu einer Rotationssymmetrieachse geteilt ist.

5. Optiksystem nach Anspruch 1, wobei die einen der mehreren reflektierenden Oberflächen des dritten reflektierenden Abschnitts und der mehreren reflektierenden Oberflächen des vierten reflektierenden Abschnitts eine flache Oberfläche bilden und die anderen eine gekrümmte Oberfläche bilden.

6. Optiksystem nach Anspruch 1, wobei mindestens einer von dem zweiten reflektierenden Abschnitt, dem dritten reflektierenden Abschnitt und dem vierten reflektierenden Abschnitt integral eine jeweilige reflektierende Oberfläche bildet.

7. Planare spektroskopische Vorrichtung, umfassend:
ein Optiksystem nach Anspruch 1;
ein spektroskopisches Element, das konfiguriert ist, Licht von dem Optiksystem spektral zu dispergieren; und
eine Detektionseinrichtung zum Detektieren des durch das spektroskopische Element spektral dispergierten Lichts.

8. Planare spektroskopische Vorrichtung nach Anspruch 7, wobei Infrarotlicht spektral dispergiert ist.

## Revendications

1. Système optique (100, 200) qui divise un flux lumineux provenant d'un plan d'objet, le système optique comprenant :
un premier miroir à surface incurvée (1) présentant une ouverture à travers laquelle passe le flux lumineux provenant du plan d'objet ou une partie de transmission (1a) à travers laquelle le flux lumineux est transmis ;
une deuxième partie réfléchissante (2) comportant une pluralité de surfaces réfléchissantes (2a) qui divise le flux lumineux provenant de l'ouverture ou de la partie de transmission (1a) du premier miroir à surface incurvée (1), et configurée pour refléter chacun des flux lumineux résultant de la division par les surfaces réfléchissantes (2a) respectives, vers des positions respectives différentes les unes des autres sur le premier miroir à surface incurvée (1) ;
une troisième partie réfléchissante (3) ayant une pluralité de surfaces réfléchissantes (3a) qui réfléchissent chacune les flux lumineux qui ont résulté de la division par la deuxième partie réfléchissante (2) et ont été réfléchis sur le premier miroir à surface incurvée (1) ; et
une quatrième partie réfléchissante (4) ayant une pluralité de surfaces réfléchissantes (4a) qui réfléchissent les flux lumineux provenant de la troisième partie réfléchissante (3),
dans lequel le nombre de surfaces réfléchissantes (3a, 4a) de chacune de la troisième partie réfléchissante et de la quatrième partie réfléchissante sur lesquelles sont incidents les flux provenant du premier miroir à surface incurvée (1) est égal à un nombre de divisions lors de la division du flux lumineux par la deuxième partie réfléchissante (2), et
dans lequel les flux lumineux respectifs réfléchis par le premier miroir à surface incurvée (1) sont réfléchis par la troisième partie réfléchissante (3) et la quatrième partie réfléchissante (4) pour être formés en image de sorte que des images divisées du plan d'objet sont formées, et
chacun des flux lumineux réfléchis par le premier miroir à surface incurvée (1) est réfléchi par la troisième partie réfléchissante (3) et la quatrième partie réfléchissante (4) pour former une image dans laquelle des images divisées sont chacune disposées linéairement dans une direction prédéterminée.

2. Système optique selon la revendication 1, dans lequel des axes centraux du premier miroir à surface incurvée, de la deuxième partie réfléchissante, de la troisième partie réfléchissante et de la quatrième partie réfléchissante sont agencés coaxialement.

3. Système optique selon la revendication 1, dans lequel chaque surface réfléchissante de la deuxième partie réfléchissante présente une forme rectangulaire.

4. Système optique selon la revendication 1,
dans lequel le premier miroir à surface incurvée est un miroir concave à symétrie de rotation, et
dans lequel, dans le premier miroir à surface incurvée, les flux lumineux résultant de la division par la deuxième partie réfléchissante sont incidents sur chacune de régions formées par division du premier miroir à surface incurvée par deux axes perpendiculaires à un axe de symétrie de rotation.

5. Système optique selon la revendication 1, dans lequel l'une de la pluralité de surfaces réfléchissantes de la troisième partie réfléchissante et de la pluralité de surfaces réfléchissantes de la quatrième partie réfléchissante est une surface plate, et l'autre est une surface incurvée.

6. Système optique selon la revendication 1, dans lequel au moins l'une parmi la deuxième partie réfléchissante, la troisième partie réfléchissante et la quatrième partie réfléchissante forme intégralement chaque surface réfléchissante.

7. Dispositif spectroscopique plan comprenant :
un système optique selon la revendication 1 ;
un élément spectroscopique configuré pour disperser spectralement de la lumière provenant du système optique ; et
un moyen de détection pour détecter la lumière spectralement dispersée par l'élément spectroscopique.

8. Dispositif spectroscopique plan selon la revendication 7, dans lequel de la lumière infrarouge est spectralement dispersée.
